# EUROPEAN PATENT SPECIFICATION

(11) **EP 4 375 534 B1**
(45) Date of publication and mention of the grant of the patent: **11.03.2026**
(21) Application number: 22208863.5
(22) Date of filing: 22.11.2022
(51) Int. Cl.: F16F 9/32, F16F 9/46

(54) **COIL ASSEMBLY FOR A DAMPING VALVE**
SPULENANORDNUNG FÜR EIN DÄMPFVENTIL
ENSEMBLE BOBINE POUR SOUPAPE D'AMORTISSEMENT

(43) Date of publication of application: 29.05.2024
(73) Proprietor: Advanced Suspension Technology LLC, Wilmington, DE 19803 (US)
(72) Inventor: EWERS, Benny, 194 27 Upplands Väsby (SE)
(74) Representative: Wagner & Geyer

(56) References cited:
- WO-A1-2022/243451
- KR-A- 20090 100 488
- US-A1- 2015 041 265
- US-B2- 9 046 145

## Description

### Technical Field

The present disclosure relates to a coil assembly for an actively controlled damping valve assembly of a vehicle, and more particularly to a coil assembly comprising an axial sealing member and a press-fit interface. The present disclosure also relates to an actively controlled damping valve assembly comprising said coil assembly and a method of mounting said coil assembly into a cavity of a valve housing for an actively controlled damping valve.

### Background

When a coil assembly is mounted at a valve housing of an actively controlled valve used in a vehicle, it is important to provide proper sealing between the coil assembly and the valve housing since improper sealing may lead to premature wear or failure of the valve due to, e.g., corrosion or the entry of particles or liquid from the surroundings. In order to prevent corrosion of the outer shell of the valve housing, the outer surface of the valve housing may be painted.

Typically, a radial seal is provided against the outer surface of an upper edge portion of the valve housing which meshes with the coil assembly to form the damping valve, such as to provide sealing between the coil assembly and the valve housing. However, the thickness of the applied paint varies between parts, and may vary within one same painted surface. Furthermore, the paint may comprise pores or impurities. These parameters may all affect the sealing ability of the radial seal, risking leakage. The preassembly of the radial seal is further complex.

It is also known to use a radial seal toward the inner surface of the valve housing, thus arranged between the inner surface of the valve housing and a portion of the coil assembly engaging the valve housing cavity. A problem with this solution is that no sealing is provided for non-painted surfaces, such as the top surface of the upper edge of the valve housing. Document US 9 046 145 B2 discloses a prior art coil assembly for an actively controlled damping valve assembly of a vehicle, the coil assembly comprising an end cap, and a mating portion arrangeable to engage with a cavity of a valve housing of the damping valve assembly, and wherein the end cap further comprises a recess having a circumferential extension and an axial extension, which recess is arrangeable to at least partly receive an upper edge portion of the valve housing when the coil assembly is mounted at the valve housing to form the damping valve assembly, and a sealing member arranged in said recess.

In view of the foregoing, it would be advantageous to provide an improved sealing between a coil assembly and a valve housing of an actively controlled damping valve assembly.

### Summary

It is an object of the present disclosure to provide an improved solution that alleviates the mentioned drawbacks with present solutions. A particular object is to provide a coil assembly with good sealing efficiency. The objects are at least solved by the disclosure as defined by the independent claims and further solved by the disclosure as defined in the dependent claims.

According to a first aspect of the disclosure, a coil assembly for an actively controlled damping valve assembly of a vehicle is provided. The coil assembly comprises an end cap and a mating portion arrangeable to engage with a cavity of a valve housing of the damping valve assembly. The mating portion comprises a fixation member comprising press-fit interference portions arrangeable to engage with an inner surface of the cavity such that the coil assembly is locked to the valve housing when mounted thereat. The end cap further comprises a recess having a circumferential extension and an axial extension, which recess is arrangeable to, at least partly, receive an upper edge portion of the valve housing when the coil assembly is mounted at the valve housing to form the damping valve assembly; and a sealing member arranged in said recess and arrangeable to abut a top surface of the upper edge portion of the valve housing when the coil assembly is mounted at the valve housing.

Providing a coil assembly comprising a fixation member having press-fit interference portions arrangeable to engage with a cavity of a valve housing and a sealing member arrangeable to abut a top surface of the upper edge portion of a valve housing allows for an efficient sealing of a damping valve assembly when the coil assembly is mounted at the valve housing to form the same. The combination of the press-fit interference of the coil assembly and the arrangement of the sealing member in the recess and arrangeable to abut a top surface of an upper edge portion of the valve housing allows for increased control of the compression of the sealing member in an axial direction of the coil assembly when the coil assembly is mounted at the valve housing. As opposed to using a circlip for fixating the coil assembly to the valve housing, wherein attachment of the coil assembly by means of the circlip requires an axial seal to compress and then spring back when the coil assembly has been attached, leading to variations in the amount of compression and coverage of the sealed surface, thus risking exposure of non-painted surfaces to corrosion, the inventors surprisingly found that by combining the sealing member arrangeable to abut a top surface of the upper edge of a valve housing and the press-fit interference of the coil assembly, such spring back of the sealing member does not occur. Thus, no over tensioning of the sealing member is required, which is advantageous since such over tensioning can lead to variations of compression and thus coverage of the sealing member, risking to expose any unpainted surface of the valve housing. This is also advantageous in that a compact coil assembly is provided.

The sealing member is adapted in the recess which is arrangeable to at least partly receive an upper edge portion of a valve housing, to abut the top surface of the upper edge portion of the valve housing when the coil assembly is mounted thereat, thus providing an axial seal. Further introduction of the upper edge of the valve housing into the recess will thereby compress the sealing member within the recess, thereby sealing the top surface of the upper edge portion of the valve housing.

The fixation member of the coil assembly is adapted in shape and size such that inner surface portions of a cavity of a valve housing with which the press-fit interference portions engage when the coil assembly is mounted thereat deform while pushing against the press-fit interference portions. Thereby, the coil assembly is rotationally, axially, and radially lockable at the valve housing.

As referred to herein, the term actively controlled damping valve assembly generally refers to a damping valve assembly adapted with means for adjusting the damping force in an automatic manner. Preferably, said means for adjusting the damping force is a coil assembly as disclosed herein. By adjusting the current running through the coils of the coil assembly, the magnetic field strength and direction inside the coil may be adjusted so that a plunger placed within said coil is moveable in a controlled manner. The position of the plunger may throttle the damping fluid in the damping valve assembly so that particular damping force characteristics are achieved. The position of the plunger may adjust a pilot pressure associated with a pilot valve.

As referred to herein, the term vehicle may refer to a four-wheeled vehicle or a two-wheeled vehicle. Further, it may refer to any one of an automobile, a bicycle, or a motorcycle, such as a motocross-type motorcycle.

The mating portion of the coil assembly is arrangeable to engage with a cavity of a valve housing of a damping valve assembly. That is, the mating portion is adapted in shape and size to geometrically fit with a cavity of a valve housing of a damping valve assembly at which the coil assembly is arrangeable. The mating portion may, according to some embodiments, be arrangeable to directly engage with the entire cavity of the valve housing, or, according to some embodiments, to partially engage with the cavity such that a gap is provided between at least a portion of the mating portion and a cavity wall. Thus, the mating portion is adapted to fit together with the cavity wall of the valve housing, also referred to as an inner surface of the cavity, an inner surface of a valve housing wall, or an inner valve housing wall, in such a manner that they are in contact at least partially or such that a gap is formed at least partially between the mating portion of the coil assembly and the cavity wall of the valve housing.

The mating portion may be substantially cylindrical in shape. The mating portion may enclose a coil member of the coil assembly. The mating portion may thus be tube-shaped, thus defining a space extending along an axis of the mating portion in which a plunger may be allowed to move under the influence of a magnetic field generated by a current flowing through the coil member.

According to an embodiment, the sealing member at least partly abuts a top surface of the recess and a first lateral surface of the recess wherein the sealing member is axially compressible within the recess. This allows for a controlled axial compression of the sealing member when the coil assembly is mounted at a valve housing to form a damping valve assembly. This also provides good protection of the valve cavity from its surroundings when the coil assembly with the sealing member is mounted at the valve housing. This is further advantageous in that the sealing member is easily mounted at the recess, thereby facilitating mounting of the coil assembly.

According to an embodiment, the first lateral surface of the recess corresponds to an outer surface of a main cylindrical portion of the end cap and the recess is further defined by a second lateral surface opposite the first lateral surface, the second lateral surface corresponding to one of a lateral surface of a skirt portion extending from the main cylindrical portion of the end cap of the coil assembly and an inner lateral surface of a casing arrangeable around at least a portion of the coil assembly. In an exemplifying embodiment, the sealing member is conveniently arranged in a gap provided between the outer surface of the main cylindrical portion of the end cap and a lateral surface of a skirt portion of the coil assembly and is axially compressible therein. This is advantageous in that it facilitates preassembly of the sealing member with the coil assembly. The skirt portion may be integral with the end cap, or it may be arrangeable at the end cap such to provide the second lateral surface of the recess. In an alternative embodiment, the sealing member is conveniently arranged in a gap provided between the outer surface of the main cylindrical portion of the end cap and an inner lateral surface of a casing arrangeable around at least a portion of the coil assembly.

According to an embodiment, the second lateral surface is releasably arrangeable at the coil assembly. According to an embodiment, the skirt portion is releasably arrangeable at the coil assembly. In an exemplifying embodiment, the skirt portion comprises protrusions arrangeable to enter a press-fit engagement with the end cap of the coil assembly. Thus, the skirt portion is releasably arrangeable at the coil assembly by press-fit engagement. However, within the present inventive concept, it is also conceivable to provide a skirt portion which is releasably arrangeable at the end cap by other means, such as by a threaded engagement, snap-lock, etc.

In an embodiment comprising a casing arrangeable around at least a portion of the coil assembly, the casing is releasably arrangeable at the coil assembly.

According to an embodiment, the sealing member is made of a flexible material. This allows compression of the sealing member when the coil assembly is mounted at a valve housing, providing sealing of the top surface of the upper edge portion of the valve housing.

According to an embodiment, the sealing member is one of a flat sealing member, a gasket, and an O-ring. In light of the present disclosure, the skilled person understands that any sealing member suitable to be arranged in the recess of the coil assembly, and arrangeable to abut a top surface of an upper end of a valve housing and axially compressible in the recess can be used for this purpose.

According to an embodiment, the sealing member is removably arranged in the recess. This is advantageous in that it allows for easy replacement of the sealing member, when necessary, without exchanging the entire coil assembly.

According to an embodiment, the fixation member has an outer surface of substantially circular geometry comprising two or more protuberances circumferentially spaced apart, and wherein the two or more protuberances define the press-fit interference portions. This allows for the coil assembly to be radially, rotationally, and axially locked to the valve housing when mounted thereat. Further, this is advantageous in that the coil assembly is not limited to being fixated by the press-fit interference portions in a particular axial rotational orientation, providing a certain degree of freedom with respect to the axial rotational orientation of the coil assembly when arranged at the valve housing.

According to an embodiment, at least one of the protuberances comprises a curved outer surface defining a press-fit interference surface engageable with the inner surface of the cavity of the valve housing. This is advantageous in that the forces involved in the press-fit interference between the coil assembly and the valve housing are distributed over the curved surface, providing a durable engagement.

According to an embodiment, at least two of the protuberances comprises a curved outer surface defining a press-fit interference surface engageable with the inner surface of the cavity, and the at least two curved outer surfaces have the same radius of curvature. This provides good distribution of engaging forces, leading to a durable engagement.

According to an embodiment, the fixation member comprises three protuberances. Preferably, the three protuberances are spaced apart equidistantly. This provides particular rotational and axial stability to the coil assembly when mounted at a valve housing. Furthermore, this prevents axial tilting of the coil assembly when mounted at the valve housing.

According to a second aspect of the disclosure, an actively controlled damping valve assembly for a vehicle is provided. The damping valve assembly comprises a valve housing defining a cavity; an actively controlled damping valve arranged in said valve housing; and the coil assembly as disclosed herein, wherein the mating portion of the coil assembly is engaged with the cavity of the valve housing and a top surface of the upper edge portion of the valve housing is received in the recess of the coil assembly and in contact with the sealing member.

According to an embodiment, the valve housing comprises a valve housing wall, an inner surface of which defines the cavity, and the inner surface of the valve housing wall comprises a step such to provide a stop portion for the fixation member of the coil assembly. By providing a stop portion for the fixation member, the fixation member is supported when the coil assembly is fully mounted at the valve housing, thereby increasing the fatigue strength of the press-fit engagement. The step may in some embodiments be horizontal. Providing a step that is inclined such to provide a stop portion for the fixation member of the coil assembly is also possible within the concept of the present disclosure.

According to a third aspect of the disclosure, a method of mounting a coil assembly into a cavity of a valve housing for an actively controlled damping valve is provided. The method comprises the steps of providing a coil as disclosed herein, wherein the sealing member is arranged in the recess of the coil assembly such that it is in contact with at least the top surface and the first lateral surface of the recess; inserting the mating portion of the coil assembly into the cavity such that the press-fit interference portions of the mating portion engage with the inner surface of the valve housing wall and the sealing member abuts a top surface of an upper edge portion of the valve housing; and deforming the valve housing wall with the press-fit interference portions of the fixation member by pressing the coil assembly further into the cavity, thereby locking the coil assembly to the valve housing, wherein the sealing member is axially compressed within the recess of the coil assembly during the steps of inserting and deforming.

According to an embodiment, the mating portion of the coil assembly is insertable into the cavity of the valve housing irrespective of the axial rotational orientation of the coil assembly. This is advantageous in that no particular axial rotational orientation of the coil assembly is required when mounting it to the valve housing, thus facilitating its mounting.

Effects and features of the second and third aspects are largely analogous to those described above in connection with the first aspect. Embodiments mentioned in relation to the first aspect are largely compatible with the second and third aspects. It is further noted that the inventive concepts relate to all possible combinations of features unless explicitly stated otherwise.

The disclosure is defined by the appended independent claims, with embodiments being set forth in the appended dependent claims, in the following description and in the drawings.

### Brief Description of the Drawings

The disclosure will in the following be described in more detail with reference to the enclosed drawings, wherein:
Fig. 1 shows a coil assembly according to an embodiment of the present disclosure;
Fig. 2 shows a coil assembly according to an embodiment of the present disclosure when inserted into a cavity of a valve housing of an actively controlled damping valve assembly;
Figs. 3A-B show cross sectional views of a coil assembly when being inserted into a cavity of a valve housing of an actively controlled damping valve assembly according to an embodiment of the present disclosure;
Figs. 4A and 5A each shows a perspective view of a coil assembly when mounted at a valve housing of an actively controlled damping valve assembly according to further embodiments of the present disclosure;
Figs. 4B and 5B show cross-sectional views of the coil assembly mounted at the valve housing of the actively controlled damping valve assemblies of Figs. 4A and 5A, respectively;
Figs. 6 and 7 show fixation members of the coil assembly according to embodiments of the present disclosure;
Fig. 8 shows steps of a method according to an embodiment of the present disclosure for mounting a coil assembly into a cavity of a valve housing for an actively controlled damping valve assembly.

### Description of Embodiments

The present disclosure will be described more fully hereinafter with reference to the accompanying drawings, in which preferred embodiments of the disclosure are shown. This disclosure may, however, be embodied in many different forms and should not be construed as limited to the embodiments set forth herein; rather, these embodiments are provided so that this disclosure will be thorough and complete, and to fully convey the scope of the disclosure to those skilled in the art. In the drawings, like numbers refer to like elements.

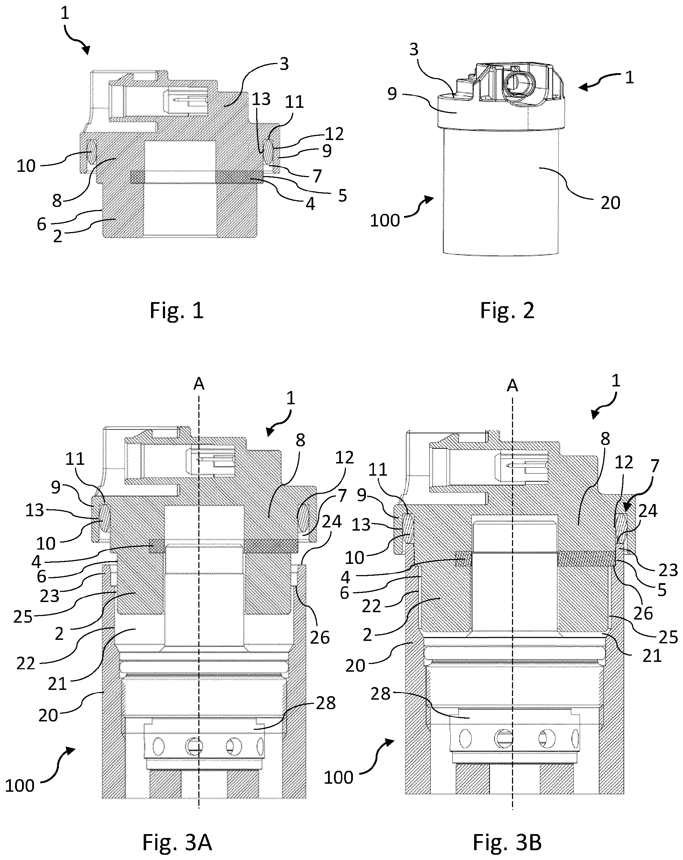

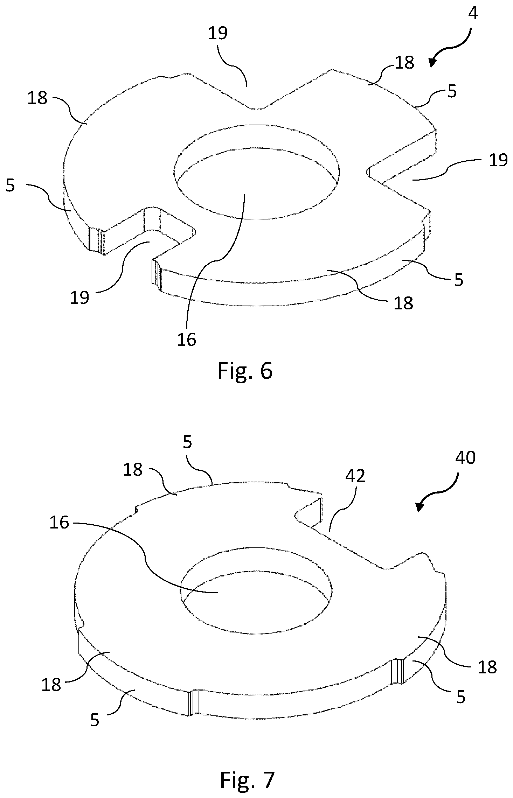

With reference to Fig. 1, there is provided a coil assembly 1 according to an embodiment of the present disclosure. The coil assembly 1 comprises a mating portion 2 and an end cap 3. The mating portion 2 comprises a fixation member 4 comprising press-fit interference portions 5, shown and described in more detail with reference to Figs. 6 and 7. The mating portion 2 is essentially cylindrical or tubular and comprises an outer cylindrical surface 6.

The end cap 3 comprises a recess 7 having a circumferential extension and an axial extension, and a sealing member 10 arranged in the recess 7. The sealing member 10 is generally annular and extends around the circumferential extension of the recess 7 and at least partly along the axial extension of the recess 7. In this exemplifying embodiment, the end cap 3 comprises a main tubular portion 8 which is adjacent the mating portion 2 and integral therewith. More particularly, the main tubular portion 8 extends to the fixation member 4 arranged at a top end of the mating portion 2 of the coil assembly 1. The end cap 3 further comprises a skirt portion 9 which extends from the main tubular portion 8, forming a recess 7 in the form of a groove between the main tubular portion 8 and the skirt portion 9 of the end cap 3, in which groove the sealing member 10 is arrangeable. The groove has thus a circumferential extension and an axial extension.

The sealing member 10 is here arranged in the recess 7 of the coil assembly 1. Outer surface portions of the sealing member 10 are in contact with a top surface 11 of the recess 7, which in this exemplifying embodiment may correspond to the bottom of the groove, and a first lateral surface 12 of the recess 7, corresponding to an outer surface portion of the main tubular portion 8. The sealing member 10 is further in contact with a second lateral surface 13, corresponding to an inner lateral surface portion of the skirt portion 9.

Fig. 2 shows perspective view of a coil assembly 1 when inserted into a cavity of a valve housing 20 of an actively controlled damping valve assembly 100 according to an embodiment of the disclosure. As can be seen in this figure, the valve housing 20 may have a substantially cylindrical shape. The end cap 3 projects beyond an upper edge of the valve housing 20. Further, in this exemplifying embodiment, the skirt portion 9 overlaps the upper edge of the valve housing 20. This is shown in more detail in Figs. 3A and 3B, showing cross-sectional views of the coil assembly 1 as it is being mounted and when mounted, respectively, at the valve housing 20. As shown in Figs. 3A and 3B, the coil assembly 1 generally extends along an axis A. The mating portion 2 is tubular and adapted to be arrangeable in the cavity 21 of the valve housing 20. Typically, the mating portion 2 and the cavity 21 are adapted in shape and size such that the cavity 21 of the valve housing 20 locks the mating portion 2 radially within the valve housing 20 when the coil assembly 1 is mounted thereat. Typically, the mating portion 2 and the cavity 21 have a tubular shape. However, providing the mating portion 2 and the cavity 21 in other shapes is also possible within the concept of the present disclosure, provided that they are adapted to be compatible such that the mating portion 2 is arrangeable in the cavity 21. In this exemplifying embodiment, the mating portion 2 is adapted such that a gap 25is defined between the outer surface 6 of the mating portion 2 and the inner surface 22 of the valve housing 20, which inner surface 22 defines the cavity 21. Generally, the mating portion 2 may be adapted such that a predetermined gap is present between the outer surface 6 of the mating portion 2 and the inner surface 22, or such that substantially no gap is present there between.

The mating portion 2 has a tubular shape defining a central hole in which a plunger may move axially along axis A under the influence of a magnetic force generated by a coil member of the coil assembly 1.

The fixation member 4 is generally arranged coaxially in the coil assembly 1 and at the upper end of the mating portion 2. The fixation member 4 may be integral with the mating portion 2. The fixation member 4 may, according to some embodiments, also be removably arrangeable at the coil assembly 1.

As seen in Fig. 3B, the recess 7 of the coil assembly 1 is arrangeable to receive an upper edge portion 23 of the valve housing 20 when the coil assembly 1 is mounted at the valve housing 20. In this mounted stage, the sealing member 10 further abuts the top surface 24 of the upper edge portion 23 of the valve housing 20, thereby providing sealing between the coil assembly 1 and the valve housing 20. As the coil assembly 1 is mounted at the valve housing 20 and the upper edge portion 23 of the valve housing 20 is received in the recess 7, the sealing member 10 is compressed axially within the recess 7.

As the coil assembly 1 is being mounted at the valve housing 20, the fixation member 4 starts to engage with the inner surface 22 of the valve housing 20. More particularly, the press-fit interference portions 5 of the fixation member 4 engage with the inner surface 22 of the valve housing 20 by pressing onto the inner surface 22. This causes the valve housing wall to deform locally, preferably elastically. The coil assembly 1 is thereby held in place by the valve housing wall locally pressing on the press-fit interference portions 5 of the fixation member 4. At each point of the surface of the press-fit interference portions 5, a radial force F_{R} and an axial force F_{A} is exerted. The force ratio R_{F} of the axial force F_{A} to the radial force F_{R} is typically 0.4-0.8. This allows the coil assembly 1 to be held securely in place at the valve housing 20. For reference and as an example, the nominal axial force F_{A} may be around 600-2100 N and the nominal radial force F_{R} may be around 1500-5250 N.

With further reference to Figs. 3A and 3B, the valve housing 20 of the damping valve assembly 100 disclosed herein comprises a step 26 at the inner surface 22 of the valve housing wall such to provide a stop portion for the fixation member 4 of the coil assembly 1. Thus, the mating portion 2 of the coil assembly 1 can be inserted into the cavity 21 of the valve housing 20 and pressed downwards therein, in parallel with the axis A, until the fixation member 4 abuts the step 26, whereby the mating portion 2 is stopped from further insertion into the cavity 21. The step 26 is typically arranged at an upper portion of the valve housing 20 and may further serve as a support for the fixation member 4. In the exemplifying embodiment shown in Figs. 3A and 3B, the step 6 extends inwardly towards the cavity 21 from valve housing 20 in a direction perpendicular to the axis A. Providing a step 26 which is inclined with respect to the axis A is, however, also possible within the concept of the present disclosure.

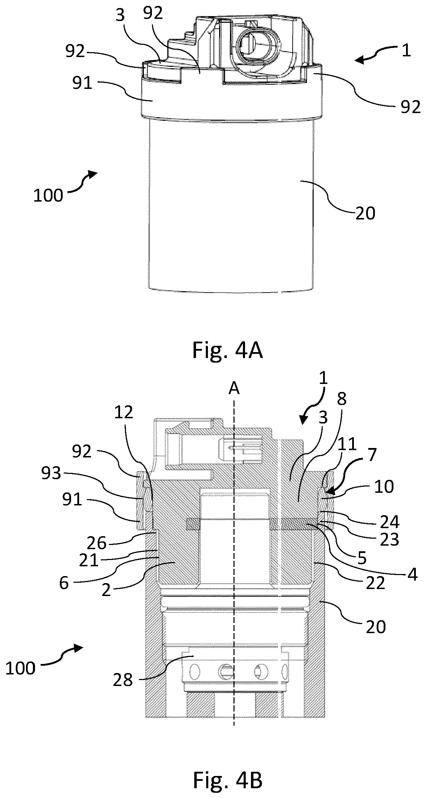

With reference now to Figs. 4A and 4B, there is provided a coil assembly according to an embodiment of the present disclosure, mounted at a valve housing 20 of a damping valve assembly 100. In this exemplifying embodiment, the seal assembly 1 comprises a skirt portion 91 arrangeable at the end cap 3 such that it overlaps the upper edge portion 23 of the valve housing 20 when the coil assembly 1 is mounted thereat. The skirt portion 91 may be fixedly arranged at the end cap 3 or it may, as in the exemplifying embodiment shown, be releasably arranged at the end cap 3. The skirt portion 91 comprises press-fit engagement portions 92, arranged to engage with the end cap 3 in a press-fit engagement. Typically, the skirt portion 91 comprises three or four press-fit engagement portions 92. Providing more than four press-fit engagement portions 92, or as few as two press-fit engagement portions 92 is, however, also conceivable within the concept of the present disclosure. Furthermore, providing a releasably arrangeable skirt portion 91 by other means than through press-fit interference is also possible, such as by a threaded engagement or a snap-lock engagement. The skirt portion 91 may be made of any material suitable to serve as a skirt portion for the coil assembly. For example, the skirt portion 91 may be made of a plastic material, or of a metal.

As shown in Fig. 4B, the sealing member 10 is arranged in the recess 7 of the end cap 3 and in contact with the top surface 11 and the first lateral surface 12 of the same. The sealing member 10 is here further in contact with an inner lateral surface 93 of the skirt portion 91, thus providing a second lateral surface 93 of the recess 7. The sealing member 10 is axially compressible within the recess 7 by the upper edge portion 23 of the valve housing 20 when the coil assembly 1 is mounted thereat.

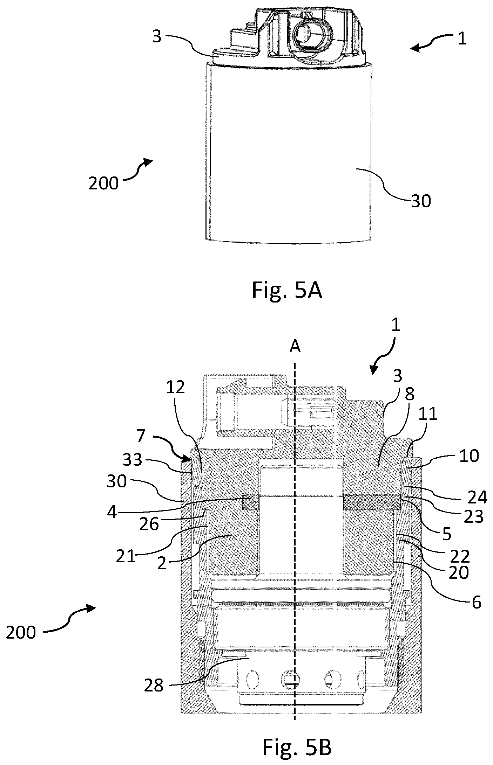

Figs. 5A and 5B show yet another embodiment of the coil assembly 1 when mounted at a valve housing 20 and arranged in a casing 30 to form a damping valve assembly 200. Also, in this exemplifying embodiment, the recess 7 comprises a top surface 11 extending perpendicular to the axis A and a first lateral surface 12 extending downwards in parallel with the axis A and inwardly recessed from the top surface 11. The sealing member 10 of the coil assembly 1 is here arranged to abut the top surface 11 and the first lateral surface 12 of the main cylindrical portion 8 of the end cap 3. In Fig. 5B, showing the coil assembly 1 mounted at the valve housing 20 of a damping valve assembly 100, the upper edge portion 23 of the valve housing 20 is received within the recess 7 and the sealing member 10 abuts the top surface 24 of the upper edge portion 23 of the valve housing 20. Further, in this exemplifying embodiment, a casing 30 is provided, arranged around the coil assembly 1 and the valve housing 20. This exemplifying embodiment comprising a casing 30 arranged around the valve housing 20 and around a portion of the coil assembly 1 is particularly useful for providing further protection of the valve housing 20. The casing 30 is preferably be made of a lightweight material of high corrosion resistance, such as aluminium. The casing 30 is further arranged around the valve housing 20 such that it provides a second lateral surface 33 against which the sealing member 10 may abut when the coil assembly 1 is mounted at the valve housing 20 by inserting the mating portion 2 into the cavity 21 of the valve housing. The valve housing 20 may in some cases be made from steel, or other magnetic material. This has the advantage that the magnetic circuit is closed also in situations where the casing 30 is made from e.g. aluminium.

According to this exemplifying embodiment, the damping valve assembly 200 may be mounted by preassembling the valve housing 20 at an actively controlled damping valve 28, to form a damping valve subassembly. The damping valve subassembly may thereafter be mounted in a cavity 31 of the casing 30. Finally, the coil assembly 1 comprising the sealing member 10 is mounted at the valve housing 20 by inserting the mating portion 2 of the coil assembly 1 into the cavity 21 of the valve housing 20 such that the press-fit interference portions 5 of the fixation member 4 engage with the inner surface 22 of the valve housing wall and the sealing member 10 abuts the top surface 24 of the upper edge portion 23 of the valve housing 20 and deforming the valve housing wall 22 with the press-fit interference portions 5 pressing the coil assembly 1 further into the cavity 21, thereby locking the coil assembly 1 to the valve housing 20, whereby the sealing member 10 is axially compressed within the recess 7. Fig. 6 shows the fixation member 4 for the coil assembly 1 according to an embodiment of the present disclosure. The fixation member 4 is disc shaped and has a generally circular geometry. The fixation member 4 according to this exemplifying embodiment comprises three press-fit interference portions 5 corresponding to outer surface portions of protuberances 18 of the disc shaped fixation member 4 which are circumferentially spaced apart. The fixation member 4 further comprises a centrally arranged through-hole 16. The fixation member 4 comprises cut-out regions 19 between the three protuberances. Thus, the cross-sectional view of the coil assembly 1 shown, e.g., in Fig. 1 is taken across such a cut-out region 19 and therefore, the fixation member 4 is seen to extend beyond the outer surface 6 of the mating portion 2 of the coil assembly 1 at one side only.

The fixation member 4 is typically made of a material comprising metal, preferably a metal which is magnetically conducting. This is advantageous in that it allows for closing the magnetic circuit generated by the coil member when a current runs therethrough. This may further prevent excessive magnetic field leakage. It may also reduce magnetic scatter. Non-limiting examples of such metals include iron, aluminium, nickel, and cobalt. The fixation member 4 may be made of a material comprising any of the aforementioned metals, or a combination thereof. Moreover, the fixation member 4 may be adapted in shape, size, and material for closing the magnetic circuit of the coil assembly 1.

Fig. 7 shows a fixation member 40 of a coil assembly 1 according to another embodiment of the present disclosure. In this exemplifying embodiment, the fixation member 40 comprises three press-fit interference portions 5, constituted by outer surface portions of three protuberances 18, each comprising a curved surface having the same radius of curvature as the other two press-fit interference portions 5. The curved surfaces of the protuberances 18 extend about 40-50 degrees in a circumferential direction. However, the curved surfaces of the protuberances 18 may extend anywhere between 10-20 degrees, 20-30 degrees, 30-40 degrees, 40-50 degrees or more in a circumferential direction. The fixation member 40 further comprises a cut-out region 42 between two protuberances, which cut-out region 42 is substantially rectangular. The skilled person would understand, in light of the present disclosure, that providing a different number of press-fit interference portions, such as two or more than three, is also conceivable within the concept of the present disclosure.

Each of Figs. 2, 3A-B, 4A-B, and 5A-B shows a part of an actively controlled damping valve assembly 100 for a vehicle, and more particularly a portion of the valve housing 20 of the actively controlled damping valve assembly 100. The damping valve assembly 100 comprises the valve housing 20 defining a cavity 21, an actively controlled damping valve 28 arranged in the valve housing 20, and the coil assembly 1 as disclosed herein. The valve housing 20 is configured to deform, preferably elastically, by the two or more press-fit interference portions 5 of the fixing member 4 of the coil assembly 1, thereby rotationally, axially, and radially locking the coil assembly 1 to the valve housing 20.

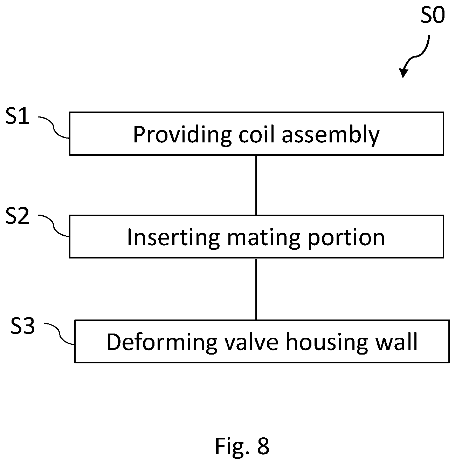

Finally, with reference to Fig. 8, there is provided a method S0 of mounting a coil assembly 1 into a cavity 21 of a valve housing 20 for an actively controlled damping valve assembly 100. The method comprises the steps of providing S1 a coil assembly 1 as disclosed herein, wherein the sealing member 10 is arranged in the recess 7 of the coil assembly 1 such that it is in contact with at least the top surface 11 and the first lateral surface 12 of the recess 7. The method further comprises the step of inserting S2 the mating portion 2 of the coil assembly 1 into the cavity 21 such that the press-fit interference portions 5 of the mating portion 2 engage with the inner surface 22 of the valve housing wall and the sealing member 7 abuts a top surface 24 of an upper edge portion 23 of the valve housing 20, and deforming S3 the valve housing wall with the press-fit interference portions 5 of the fixation member 12 by pressing the coil assembly 1 further into the cavity 21, thereby locking the coil assembly 1 to the valve housing 20, wherein the sealing member 10 is axially compressed within the recess 7 of the coil assembly 1 during the steps of inserting S2 and deforming S3.

In the drawings and specification, preferred embodiments and examples of the disclosure have been disclosed and although specific terms are employed, they are used in a generic and descriptive sense only and not for the purpose of limitation, the scope of the disclosure being set forth in the following claims.

## Claims

1. A coil assembly (1) for an actively controlled damping valve assembly (100, 200) of a vehicle, the coil assembly (1) comprising
an end cap (3); and
a mating portion (2) arrangeable to engage with a cavity (21) of a valve housing (20) of the damping valve assembly (100, 200),
wherein the mating portion (2) comprises a fixation member (4) comprising press-fit interference portions (5) arrangeable to engage with an inner surface (22) of the cavity (21) such that the coil assembly (1) is locked to the valve housing (20) when mounted thereat; and
wherein the end cap (3) further comprises
a recess (7) having a circumferential extension and an axial extension, which recess (7) is arrangeable to at least partly receive an upper edge portion (23) of the valve housing (20) when the coil assembly (1) is mounted at the valve housing (20) to form the damping valve assembly (100, 200); and
a sealing member (10) arranged in said recess (7) and arrangeable to abut a top surface (24) of the upper edge portion (23) of the valve housing (20) when the coil assembly (1) is mounted at the valve housing (20).

2. The coil assembly (1) according to claim 1, wherein the sealing member (10) at least partly abuts a top surface (11) of the recess (7) and a first lateral surface (12) of the recess (7), and wherein the sealing member (10) is axially compressible within the recess (7).

3. The coil assembly (1) according to claim 1 or 2, wherein the first lateral surface (12) of the recess (7) corresponds to an outer surface of a main cylindrical portion (8) of the end cap (3) and wherein the recess (7) is further defined by a second lateral surface (13, 33, 93) opposite the first lateral surface (12), the second lateral surface (13, 33, 93) corresponding to one of a lateral surface (93) of a skirt portion (9, 91) extending from the main cylindrical portion (8) of the end cap (3) of the coil assembly (1) and an inner lateral surface (33) of a casing (30) arrangeable around at least a portion of the coil assembly (1).

4. The coil assembly (1) according to claim 3, wherein the second lateral surface (33, 93) is releasably arrangeable at the coil assembly (1).

5. The coil assembly (1) according to any one of the preceding claims, wherein the sealing member (10) is made of a flexible material.

6. The coil assembly (1) according to any one of the preceding claims, wherein the sealing member (10) is one of a flat sealing member, a gasket, and an O-ring.

7. The coil assembly (1) according to any one of the preceding claims, wherein
the sealing member (10) is removably arranged in the recess (7).

8. The coil assembly (1) according to any one of the preceding claims, wherein the fixation member (4) has an outer surface of substantially circular geometry comprising two or more protuberances (18) circumferentially spaced apart, and wherein the two or more protuberances (18) define the press-fit interference portions (5).

9. The coil assembly (1) according to claim 8, wherein at least one of the protuberances (18) comprises a curved outer surface defining a press-fit interference surface engageable with the inner surface (22) of the cavity (21) of the valve housing (20).

10. The coil assembly (1) according to claim 8 or 9, wherein at least two of the protuberances (18) comprise
a curved outer surface defining a press-fit
interference surface engageable with the inner surface (22) of the cavity (21), and wherein the at least two curved outer surfaces have the same radius of curvature.

11. The coil assembly according to any one of claims 8-10, wherein the fixation member (4) comprises three protuberances (18).

12. An actively controlled damping valve assembly (100, 200) for a vehicle comprising
a valve housing (20) defining a cavity (21);
an actively controlled damping valve (28) arranged in said valve housing (20); and
the coil assembly (1) according to any one of the preceding claims, wherein the mating portion (2) of the coil assembly (1) is engaged with the cavity (21) of the valve housing (20) and a top surface (24) of the upper edge portion (23) of the valve housing (20) is received in the recess (7) of the coil assembly (1) and in contact with the sealing member (10).

13. The actively controlled damping valve assembly (100, 200) according to claim 12, wherein the valve housing (20) comprises a valve housing wall, an inner surface (22) of which defines the cavity (21), and the inner surface (22) of the valve housing wall comprises a step (26) such to provide a stop portion for the fixation member (4) of the coil assembly (1).

14. A method (S0) of mounting a coil assembly into a cavity of a valve housing for an actively controlled damping valve assembly, the method comprising the steps of
providing (S1) a coil assembly according to any one of claims 1-11 wherein the sealing member is arranged in the recess of the coil assembly such that it is in contact with at least the top surface and the first lateral surface of the recess;
inserting (S2) the mating portion of the coil assembly into the cavity such that the press-fit interference portions of the mating portion engage with the inner surface of the valve housing wall and the sealing member abuts a top surface of an upper edge portion of the valve housing; and
deforming (S3) the valve housing wall with the press-fit interference portions of the fixation member by pressing the coil assembly further into the cavity, thereby locking the coil assembly to the valve housing, wherein the sealing member is axially compressed within the recess of the coil assembly during the steps of inserting (S2) and deforming (S3).

15. The method according to claim 14, wherein the mating portion of the coil assembly is insertable into the cavity of the valve housing irrespective of the axial rotational orientation of the coil assembly.

## Patentansprüche

1. Eine Spulenanordnung (1) für eine aktiv gesteuerte Dämpfungsventilanordnung (100, 200) eines Fahrzeugs, wobei die Spulenanordnung (1) folgende Eigenschaften aufweist:
eine Endkappe (3); und
einen Passabschnitt (2), der so angeordnet werden kann, dass er mit einem Hohlraum (21) eines Ventilgehäuses (20) der Dämpfungsventilanordnung (100, 200) in Eingriff steht,
wobei der Passabschnitt (2) ein Befestigungselement (4) aufweist, das Presssitz-Übermaßabschnitte (5) aufweist, die so angeordnet werden können, dass sie mit einer Innenfläche (22) des Hohlraums (21) in Eingriff stehen, sodass die Spulenanordnung (1) an dem Ventilgehäuse (20) arretiert wird, wenn sie daran angebracht ist; und
wobei die Endkappe (3) ferner Folgendes aufweist:
eine Aussparung (7) mit einer Umfangserstreckung und einer axialen Erstreckung, wobei die Aussparung (7) so angeordnet werden kann, dass sie wenigstens teilweise einen oberen Randabschnitt (23) des Ventilgehäuses (20) aufnimmt, wenn die Spulenanordnung (1) an dem Ventilgehäuse (20) angebracht ist, um die Dämpfungsventilanordnung (100, 200) auszubilden; und
ein Dichtungselement (10), das in der Aussparung (7) angeordnet ist und das so angeordnet werden kann, dass es an einer Oberseite (24) des oberen Randabschnitts (23) des Ventilgehäuses (20) anliegt, wenn die Spulenanordnung (1) am Ventilgehäuse (20) angebracht ist.

2. Die Spulenanordnung (1) nach Anspruch 1, wobei das Dichtungselement (10) wenigstens teilweise an einer Oberseite (11) der Aussparung (7) und an einer ersten Seitenfläche (12) der Aussparung (7) anliegt und wobei das Dichtungselement (10) innerhalb der Aussparung (7) axial komprimierbar ist.

3. Die Spulenanordnung (1) nach Anspruch 1 oder 2, wobei die erste Seitenfläche (12) der Aussparung (7) einer Außenfläche eines zylindrischen Hauptabschnitts (8) der Endkappe (3) entspricht und wobei die Aussparung (7) ferner durch eine zweite Seitenfläche (13, 33, 93) definiert ist, die der ersten Seitenfläche (12) gegenüberliegt, wobei die zweite Seitenfläche (13, 33, 93) einer Seitenfläche (93) eines Blendenabschnitts (9, 91), der sich vom zylindrischen Hauptabschnitt (8) der Endkappe (3) der Spulenanordnung (1) erstreckt, oder einer inneren Seitenfläche (33) eines Gehäuses (30) entspricht, das um wenigstens einen Abschnitt der Spulenanordnung (1) herum angeordnet werden kann.

4. Die Spulenanordnung (1) nach Anspruch 3, wobei die zweite Seitenfläche (33, 93) lösbar an der Spulenanordnung (1) anbringbar ist.

5. Die Spulenanordnung (1) nach einem der vorhergehenden Ansprüche, wobei das Dichtungselement (10) aus einem flexiblen Material besteht.

6. Die Spulenanordnung (1) nach einem der vorhergehenden Ansprüche, wobei das Dichtungselement (10) ein flaches Dichtungselement, eine Dichtung oder ein O-Ring ist.

7. Die Spulenanordnung (1) nach einem der vorhergehenden Ansprüche, wobei das Dichtungselement (10) lösbar in der Aussparung (7) angeordnet ist.

8. Die Spulenanordnung (1) nach einem der vorhergehenden Ansprüche, wobei das Befestigungselement (4) eine Außenfläche von im Wesentlichen kreisförmiger Geometrie aufweist, die zwei oder mehr in Umfangsrichtung voneinander beabstandete Vorsprünge (18) aufweist, und wobei die zwei oder mehr Vorsprünge (18) die Presssitz-Übermaßabschnitte (5) definieren.

9. Die Spulenanordnung (1) nach Anspruch 8, wobei wenigstens einer der Vorsprünge (18) eine gekrümmte Außenfläche aufweist, die eine Presssitz-Übermaßfläche definiert, die mit der Innenfläche (22) des Hohlraums (21) des Ventilgehäuses (20) in Eingriff bringbar ist.

10. Die Spulenanordnung (1) nach Anspruch 8 oder 9, wobei wenigstens zwei der Vorsprünge (18) eine gekrümmte Außenfläche aufweisen, die eine Presssitz-Übermaßfläche definiert, die mit der Innenfläche (22) des Hohlraums (21) in Eingriff bringbar ist, und wobei die wenigstens zwei gekrümmten Außenflächen den gleichen Krümmungsradius aufweisen.

11. Die Spulenanordnung nach einem der Ansprüche 8 bis 10, wobei das Befestigungselement (4) drei Vorsprünge (18) aufweist.

12. Eine aktiv gesteuerte Dämpfungsventilanordnung (100, 200) für ein Fahrzeug, die Folgendes aufweist:
ein Ventilgehäuse (20), das einen Hohlraum (21) definiert;
ein aktiv gesteuertes Dämpfungsventil (28), das in dem Ventilgehäuse (20) angeordnet ist; und
die Spulenanordnung (1) nach einem der vorhergehenden Ansprüche, wobei der Passabschnitt (2) der Spulenanordnung (1) mit dem Hohlraum (21) des Ventilgehäuses (20) in Eingriff steht und wobei eine Oberseite (24) des oberen Randabschnitts (23) des Ventilgehäuses (20) in der Aussparung (7) der Spulenanordnung (1) aufgenommen ist und mit dem Dichtungselement (10) in Kontakt steht.

13. Die aktiv gesteuerte Dämpfungsventilanordnung (100, 200) nach Anspruch 12, wobei das Ventilgehäuse (20) eine Ventilgehäusewand aufweist, wobei eine Innenfläche (22) davon den Hohlraum (21) definiert, und wobei die Innenfläche (22) der Ventilgehäusewand eine Stufe (26) aufweist, um einen Anschlagabschnitt für das Befestigungselement (4) der Spulenanordnung (1) zu bilden.

14. Ein Verfahren (S0) zum Anbringen einer Spulenanordnung in einen Hohlraum eines Ventilgehäuses hinein für eine aktiv gesteuerte Dämpfungsventilanordnung, wobei das Verfahren die folgenden Schritte aufweist:
Bereitstellen (S1) einer Spulenanordnung nach einem der Ansprüche 1 bis 11, wobei das Dichtungselement in der Aussparung der Spulenanordnung so angeordnet ist, dass es mit wenigstens der Oberseite und der ersten Seitenfläche der Aussparung in Kontakt steht;
Einführen (S2) des Passabschnitts der Spulenanordnung in den Hohlraum, so dass die Presssitz-Übermaßabschnitte des Passabschnitts mit der Innenfläche der Ventilgehäusewand in Eingriff stehen und wobei das Dichtungselement an einer Oberseite eines oberen Randabschnitts des Ventilgehäuses anliegt; und
Verformen (S3) der Ventilgehäusewand mit den Presssitz-Übermaßabschnitten des Befestigungselements durch weiteres Eindrücken der Spulenanordnung in den Hohlraum hinein, wodurch die Spulenanordnung am Ventilgehäuse arretiert wird, wobei das Dichtungselement während der Schritte des Einführens (S2) und Verformens (S3) innerhalb der Aussparung der Spulenanordnung axial zusammengedrückt wird.

15. Das Verfahren nach Anspruch 14, wobei der Passabschnitt der Spulenanordnung unabhängig von der axialen Drehausrichtung der Spulenanordnung in den Hohlraum des Ventilgehäuses einführbar ist.

## Revendications

1. Ensemble bobine (1) destiné à un ensemble soupape d'amortissement (100, 200) à commande active d'un véhicule, l'ensemble bobine (1) comprenant
une coiffe d'extrémité (3) ; et
une partie d'accouplement (2) pouvant être agencée pour venir en prise avec une cavité (21) d'un logement de soupape (20) de l'ensemble soupape d'amortissement (100, 200),
dans lequel la partie d'accouplement (2) comprend un élément de fixation (4) comprenant des parties d'interférence à ajustement serré (5) pouvant être agencées pour venir en prise avec une surface interne (22) de la cavité (21) de telle sorte que l'ensemble bobine (1) est verrouillé au logement de soupape (20) lorsqu'il est monté au niveau de celui-ci ; et
dans lequel la coiffe d'extrémité (3) comprend en outre
un évidement (7) ayant une extension circonférentielle et une extension axiale, cet évidement (7) pouvant être agencé pour recevoir au moins partiellement une partie de bord supérieure (23) du logement de soupape (20) lorsque l'ensemble bobine (1) est monté au niveau du logement de soupape (20) pour former l'ensemble soupape d'amortissement (100, 200) ; et
un élément d'étanchéité (10) agencé dans ledit évidement (7) et pouvant être agencé pour venir en butée contre une surface supérieure (24) de la partie de bord supérieure (23) du logement de soupape (20) lorsque l'ensemble bobine (1) est monté au niveau du logement de soupape (20).

2. Ensemble bobine (1) selon la revendication 1, dans lequel l'élément d'étanchéité (10) vient au moins partiellement en butée contre une surface supérieure (11) de l'évidement (7) et une première surface latérale (12) de l'évidement (7), et dans lequel l'élément d'étanchéité (10) est axialement compressible au sein de l'évidement (7).

3. Ensemble bobine (1) selon la revendication 1 ou 2, dans lequel la première surface latérale (12) de l'évidement (7) correspond à une surface externe d'une partie cylindrique principale (8) de la coiffe d'extrémité (3) et dans lequel l'évidement (7) est défini en outre par une seconde surface latérale (13, 33, 93) opposée à la première surface latérale (12), la seconde surface latérale (13, 33, 93) correspondant à l'une parmi une surface latérale (93) d'une partie de jupe (9, 91) s'étendant à partir de la partie cylindrique principale (8) de la coiffe d'extrémité (3) de l'ensemble bobine (1) et une surface latérale interne (33) d'une enveloppe (30) pouvant être agencée autour d'au moins une partie de l'ensemble bobine (1).

4. Ensemble bobine (1) selon la revendication 3, dans lequel la seconde surface latérale (33, 93) peut être agencée de manière libérable au niveau de l'ensemble bobine (1).

5. Ensemble bobine (1) selon l'une quelconque des revendications précédentes, dans lequel l'élément d'étanchéité (10) est fabriqué dans un matériau flexible.

6. Ensemble bobine (1) selon l'une quelconque des revendications précédentes, dans lequel l'élément d'étanchéité (10) est l'un parmi un élément d'étanchéité plat, une garniture d'étanchéité, et un joint torique.

7. Ensemble bobine (1) selon l'une quelconque des revendications précédentes, dans lequel l'élément d'étanchéité (10) est agencé de manière amovible dans l'évidement (7).

8. Ensemble bobine (1) selon l'une quelconque des revendications précédentes, dans lequel l'élément de fixation (4) a une surface externe de géométrie sensiblement circulaire comprenant deux protubérances (18) ou plus espacées circonférentiellement, et dans lequel les deux protubérances (18) ou plus définissent les parties d'interférence à ajustement serré (5).

9. Ensemble bobine (1) selon la revendication 8, dans lequel au moins l'une des protubérances (18) comprend une surface externe courbée définissant une surface d'interférence à ajustement serré pouvant venir en prise avec la surface interne (22) de la cavité (21) du logement de soupape (20).

10. Ensemble bobine (1) selon la revendication 8 ou 9, dans lequel au moins deux des protubérances (18) comprennent une surface externe courbée définissant une surface d'interférence à ajustement serré pouvant venir en prise avec la surface interne (22) de la cavité (21), et dans lequel les au moins deux surfaces externes courbées ont le même rayon de courbure.

11. Ensemble bobine selon l'une quelconque des revendications 8 à 10, dans lequel l'élément de fixation (4) comprend trois protubérances (18).

12. Ensemble soupape d'amortissement (100, 200) à commande active, destiné à un véhicule comprenant
un logement de soupape (20) définissant une cavité (21) ;
une soupape d'amortissement (28) à commande active agencée dans ledit logement de soupape (20) ; et
l'ensemble bobine (1) selon l'une quelconque des revendications précédentes, dans lequel la partie d'accouplement (2) de l'ensemble bobine (1) est en prise avec la cavité (21) du logement de soupape (20) et une surface supérieure (24) de la partie de bord supérieure (23) du logement de soupape (20) est reçue dans l'évidement (7) de l'ensemble bobine (1) et en contact avec l'élément d'étanchéité (10).

13. Ensemble soupape d'amortissement (100, 200) à commande active selon la revendication 12, dans lequel le logement de soupape (20) comprend une paroi de logement de soupape, dont une surface interne (22) définit la cavité (21), et la surface interne (22) de la paroi de logement de soupape comprend un étagement (26) de façon à fournir une partie d'arrêt pour l'élément de fixation (4) de l'ensemble bobine (1).

14. Procédé (S0) de montage d'un ensemble bobine dans une cavité d'un logement de soupape destiné à un ensemble soupape d'amortissement à commande active, le procédé comprenant les étapes consistant à
fournir (S1) un ensemble bobine selon l'une quelconque des revendications 1 à 11 dans lequel l'élément d'étanchéité est agencé dans l'évidement de l'ensemble bobine de telle sorte qu'il est en contact au moins avec la surface supérieure et la première surface latérale de l'évidement ;
insérer (S2) la partie d'accouplement de l'ensemble bobine dans la cavité de telle sorte que les parties d'interférence à ajustement serré de la partie d'accouplement viennent en prise avec la surface interne de la paroi de logement de soupape et l'élément d'étanchéité vient en butée contre une surface supérieure d'une partie de bord supérieure du logement de soupape ; et
déformer (S3) la paroi de logement de soupape avec les parties d'interférence à ajustement serré de l'élément de fixation en pressant l'ensemble bobine plus loin dans la cavité, en verrouillant de ce fait l'ensemble bobine au logement de soupape, dans lequel l'élément d'étanchéité est axialement comprimé au sein de l'évidement de l'ensemble bobine pendant les étapes d'insertion (S2) et de déformation (S3).

15. Procédé selon la revendication 14, dans lequel la partie d'accouplement de l'ensemble bobine peut être insérée dans la cavité du logement de soupape indépendamment de l'orientation axiale de rotation de l'ensemble bobine.
